# EUROPÄISCHE PATENTANMELDUNG

(11) **EP 2 314 160 A1**
(43) Veröffentlichungstag der Anmeldung: **27.04.2011**
(21) Anmeldenummer: 10401177.0
(22) Anmeldetag: 18.10.2010
(51) Int. Cl.: A01M 7/00

(54) **Selbstfahrende Pflanzenschutzspritze mit mehreren Flüssigkeitstanks**

(30) Priorität: 21.10.2009 DE 102009044298
(71) Anmelder: Amazonen-Werke H. Dreyer GmbH & Co. KG, 49205 Hasbergen (DE)
(72) Erfinder: Ehlen, Volker, 49205 Hasbergen (DE)

(57) **Zusammenfassung**

Selbstfahrende Pflanzenschutzspritze mit einem sich auf einem Räder (2,3) aufweisenden Fahrwerk (1) abstützenden Rahmen (4), einer am und/oder im vorderen Bereich des Rahmens (4) angeordneten Fahrerkabine (5), einem und/oder im hinteren Bereich des Rahmens angeordneten Spritzgestänge, zumindest einem zwischen Fahrerkabine (5) und Spritzgestänge angeordneten Flüssigkeitstank (7,8) und einer zwischen Fahrerkabine und Spritzgestänge angeordneten Motorgetriebeeinheit (6). Um hier auf einfache Weise Abhilfe zu schaffen, ist vorgesehen, dass die Motorgetriebeeinheit im Bereich zwischen vorderen und hinteren Rädern (2,3) angeordnet ist, dass zumindest zwei Flüssigkeitstanks (7,8) vorgesehen sind, dass zumindest ein Flüssigkeitstank (7) zwischen und oberhalb der vorderen Räder (2) und zumindest ein Flüssigkeitstank (8) im Bereich zwischen und oberhalb der hinteren Räder (3) angeordnet ist.

## Beschreibung

Die Erfindung betrifft eine selbstfahrende Pflanzenschutzspritze gemäß des Oberbegriffes des Patentanspruches 1.

Derartige selbstfahrende Pflanzenschutzspritzen sind in der Praxis bekannt geworden. Bei diesen Spritzen gibt es drei verschiedene Maschinenkonzepte bzw. -typen:
Bei dem ersten Typ sitzt die Fahrerkabine ganz vorne auf der Maschine, meist über oder vor den Vorderrädern der Maschine.
Die Motor- Getriebeeinheit sitzt in Fahrtrichtung hinter der Kabine. Dieser folgt der Flüssigkeitstank. Hinter dem Flüssigkeitstank ist dann das Spritzgestänge angeordnet.
Diese Anordnung hat den Vorteil, dass der Fahrer einen guten Überblick besitzt. Nachteilig ist bei diesem Typ, eingeschenkte Ausnutzung des Bauraumes im Bereich der Räder der vorderen Achse. Vielfach sitzt der Motor im Bereich der Räder der vorderen Achse.

Ein weiterer Typ zeichnet sich dadurch aus, dass der Motor vor der Fahrerkabine angeordnet ist. Die Kabine ist in der Fahrzeugmitte angeordnet. Der Überblick des Fahrers ist bei eingeklapptem Gestänge in Transportstellung während der Fahrt gestört. Außerdem ist der Raum für den Flüssigkeitstank auf der Rückseite der Maschine reduziert.

Bei einem weiteren Maschinenkonzept ist die Fahrerkabine im vorderen Bereich der Maschine angeordnet. Das Spritzgestänge sitzt dann vor der Kabine im vorderen Bereich der Maschine. Hierdurch hat der Fahrer im Einsatz das Gestänge ständig im Blick. Der Überblick des Fahrers ist jedoch teilweise durch das in Transportstellung eingekappte Gestänge während der Transportfahrt gestört. Hinter der Kabine ist dann der Flüssigkeitstank angeordnet.

Allen Typen ist gemeinsam, dass der Bauraum im Bereich der Räder der vorderen Achse nur sehr schlecht ausgenutzt wird, da die Abmessungen des Motors vorgegeben und nicht an dem größtmöglich vorhandenen Freiraum anpassbar sind. Weiterhin sind die Wege zur Übertragung der Leistung vom Motor zu den Rädern der hinteren Achse wesentlich länger als zu den vorderen Achsen.

Der Erfindung liegt die Aufgabe zugrunde, hier auf einfache Weise Abhilfe und ein verbessertes Baukonzept zu schaffen.

Diese Aufgabe wird dadurch gelöst, dass die Motor-Getriebeeinheit im Bereich zwischen vorderen und hinteren Rädern angeordnet ist, dass zumindest zwei Flüssigkeitstanks vorgesehen sind, dass zumindest ein Flüssigkeitstank zwischen und oberhalb der vorderen Räder und zumindest ein Flüssigkeitstank im Bereich zwischen und oberhalb der hinteren Räder angeordnet ist. Infolge dieser Maßnahmen kann das Gewicht der Flüssigkeitstank optimal auf die Vorder- und Hinterachse verteilt werden, so dass sich unabhängig vom Tankfüllstand eine nahezu gleiche Achslast ergibt. Weiterhin lassen sich die Behälter den Bauräumen vorn und hinten im Bereich der Räder und an die Lenkwinkel in optimierter Weise anpassen. Die Räume können also somit optimal genutzt werden. Weiterhin reduziert sich die Schwerpunkthöhe der Maschine im Vergleich zu den bekannten selbstfahrenden

### Pflanzenschutzspritzen.

Eine vorteilhafte Anordnung der Motor- und Getriebeeinheit für eine selbstfahrende Pflanzenschutzspritze lässt sich dadurch erreichen, dass die Motor- Getriebeeinheit zwischen dem Flüssigkeitstank angeordnet ist.

Um einen weiteren Flüssigkeitsbehälter, beispielsweise für Frischwasser in vorteilhafter Weise auf der selbstfahrenden Pflanzenschutzspritze anordnen zu können, ist vorgesehen, dass oberhalb der Motorgetriebeeinheit und zwischen den Flüssigkeitstanks zumindest ein Flüssigkeitsbehälter angeordnet ist.

Um in einfacher Weise einen Flüssigkeitsaustausch zwischen den Flüssigkeitstanks zu erreichen, ist vorgesehen, dass zumindest ein zwischen den Flüssigkeitstanks angeordneter Flüssigkeitsbehälter die Flüssigkeitstanks miteinander verbindet. Eine optimale Ausnutzung der Bauräume der Pflanzenschutzspritze für die Anordnung der Flüssigkeitstanks lässt sich dadurch erreichen, dass die Bereiche der Flüssigkeitstanks zwischen den Rädern an den vorhandnem Freiraum zwischen den Rädern und den Lenkwinkeln der Räder angepasst ausgestaltet sind.

Eine vorteilhafte Ausgestaltung eines Flüssigkeitstanks mit einer vorteilhaften Anordnung der Motor- und Getriebeeinheit, die zwischen den Vorder- und Hinterrädern platziert ist, lässt sich dadurch erreichen, dass der Flüssigkeitstank, der über den zwischen ihnen angeordneten Flüssigkeitsbehälter zu einem Flüssigkeitstank verbunden ist, eine Einbuchtung entsprechend der oberen Kontur der unteren Getriebeeinheit zur Anordnung der Motorgetriebeeinheit aufweist

Um einen einfachen Austausch der Flüssigkeit zwischen dem vorderen und hinteren Tank zu erreichen, ist vorgesehen, dass eine Umpumpvorrichtung zum Umpumpen der Flüssigkeit zwischen dem vorderen und dem hinteren Tank vorgesehen ist.

Weitere Einzelheiten der Erfindung sind den übrigen Unteransprüchen, der Beispielsbeschreibung und den Zeichnungen zu entnehmen. Hierbei zeigen
Fig. 1 eine selbstfahrende Pflanzenschutzspritze in Seitenansicht und Prinzipdarstellung,
Fig. 2 eine selbstfahrende Pflanzenschutzspritze in Seitenansicht und Prinzipdarstellung und
Fig. 3 eine selbstfahrende Pflanzenschutzspritze in Seitenansicht und Prinzipdarstellung.

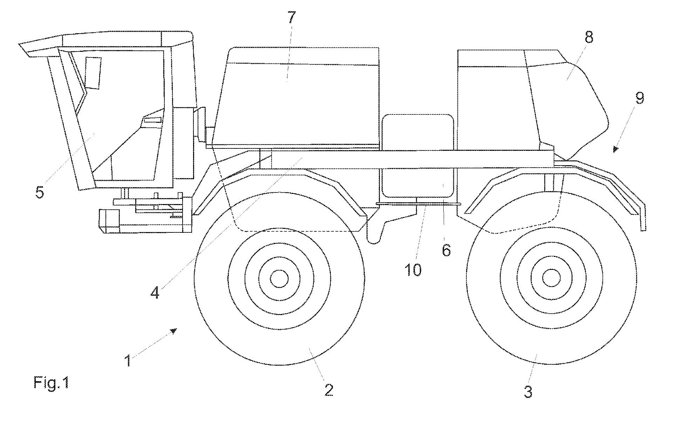

Die selbstfahrende Pflanzenschutzspritze gemäß der Fig. 1 weist ein Fahrwerk 1 mit den vorderen und hinteren Laufrädern 2 und 3 auf. Auf diesem Fahrwerk 1 stützt sich der Rahmen 4 der Pflanzenschutzspritze ab. Im vorderen Bereich des Rahmens 4 ist die Fahrerkabine 5 angeordnet. In dem Bereich zwischen den zwischen den vorderen 2 und hinteren Rädern 3 des Fahrwerks 1 ist die Motor-Getriebeeinheit 6 angeordnet. Weiterhin weist die Pflanzenschutzspritze zwei Flüssigkeitstanks 7 und 8 auf, von denen der eine teilweise zwischen und oberhalb der vorderen Räder 2 zwischen der Fahrerkabine 5 und der Motor- und Getriebeeinheit 6 und der weitere Flüssigkeitstank im Bereich teilweise zwischen und oberhalb der hinteren Räder 3 angeordnet ist. Somit ist die Motor- und Getriebeeinheit 6 zwischen den beiden Flüssigkeitstanks 7 und 8 angeordnet. Hierbei erstrecken sich die beiden Flüssigkeitstanks 7 und 8 in dem Bereich zwischen den vorderen und hinteren Räder 2 und 3. Die Bereiche der Flüssigkeitstanks 7 und 8 sind zwischen den Rädern ist an den vorhandenen Freiraum zwischen den Rädern 2 und 3 und den Lenkwinkeln der Räder 2 und 3 entsprechend angepasst ausgestaltet.

In nicht dargestellter Weise weist die Pflanzenschutzspritze ein Spritzgestänge auf, welches mittels geeigneter Kupplung-und Haltevorrichtungen an dem Rahmen 4 der Pflanzenschutzspritze vor der Fahrerkabine 5 oder auf der Rückseite 9 der Pflanzenschutzspritze angeordnet ist.

Im unteren Bereich sind die Flüssigkeitstanks 7, 8 mittels einer Verbindungsleitung 10 zum Umpumpen der sich in den Flüssigkeitstanks 7, 8 befindlichen Flüssigkeiten angeordnet.

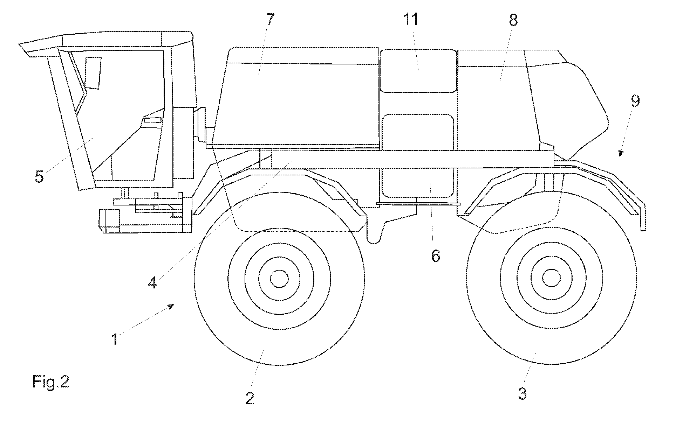

Das Ausführungsbeispiel gemäß Fig. 2 unterscheidet sich von dem Ausführungsbeispiel gemäß Fig. 1 dadurch, dass oberhalb der Motor-Getriebeeinheit 6 zwischen den beiden Flüssigkeitstanks 7, 8 ein Flüssigkeitsbehälter 11, z.B. zur Aufnahme von Frischwasser angeordnet ist.

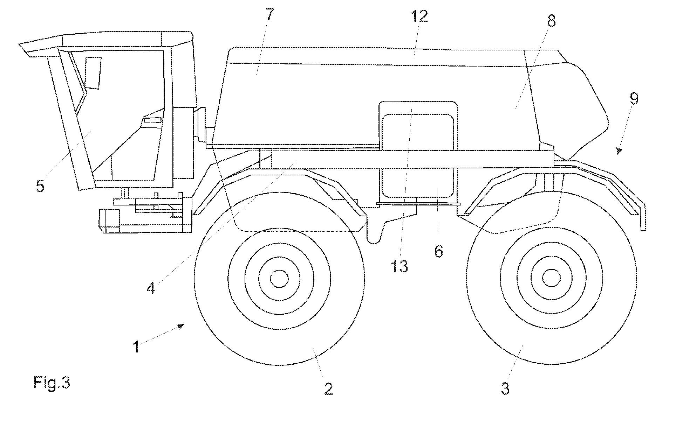

Das Ausführungsbeispiel gemäß Fig. 3 unterscheidet sich von den vorhergehenden Ausführungsbeispielen dadurch, dass die Flüssigkeitstanks 7, 8 vor und hinter der Motor-Getriebeeinheit 6, angeordnet sind, miteinander verbunden sind, so dass der Flüssigkeitstank 12 einteilig ausgebildet ist. Somit wird durch den zwischen den Flüssigkeitstanks 7, 8 angeordnete Flüssigkeitsbehälter die beiden Flüssigkeitstanks 7,8 miteinander zu einem einzigen Tank 12 verbunden. Der Flüssigkeitstank 12, der über den zwischen ihnen angeordneten Flüssigkeitsbehälter zu einem Flüssigkeitstank 12 verbunden ist, weist eine Einbuchtung 13 entsprechend der oberen Kontur der unteren Getriebeeinheit 6zur Anordnung der Motor- und Getriebeeinheit. Auch dieser Flüssigkeitstank 12 weist eine Umpumpvorrichtung zum Umpumpen der Flüssigkeit zwischen dem vorderen und hinteren Bereich 7, 8 des Tanks 12 auf.

## Patentansprüche

1. Selbstfahrende Pflanzenschutzspritze mit einem sich auf einem Räder aufweisenden Fahrwerk abstützenden Rahmen, einer am und/oder im vorderen Bereich des Rahmens angeordneten Fahrerkabine, einem und/oder im hinteren Bereich des Rahmens angeordneten Spritzgestänge, zumindest einem zwischen Fahrerkabine und Spritzgestänge angeordneten Flüssigkeitstank und einer zwischen Fahrerkabine und Spritzgestänge angeordneten Motorgetriebeeinheit, **dadurch gekennzeichnet, dass** die Motor- Getriebeeinheit ( 6 ) im Bereich zwischen vorderen und hinteren Rädern ( 2, 3 ) angeordnet ist, dass zumindest zwei Flüssigkeitstanks ( 7, 8 ) vorgesehen sind, dass zumindest ein Flüssigkeitstank ( 7 ) zwischen und oberhalb der vorderen Räder ( 2 ) und zumindest ein Flüssigkeitstank ( 8 ) im Bereich zwischen und oberhalb der hinteren Räder ( 3 ) angeordnet ist.

2. Pflanzenschutzspritze nach Anspruch 1, **dadurch gekennzeichnet, dass** die Motor- Getriebeeinheit ( 6 ) zwischen den Flüssigkeitstanks ( 7, 8 ) angeordnet ist.

3. Pflanzenschutzspritze nach zumindest einem der vorstehenden Ansprüche, **dadurch gekennzeichnet, dass** oberhalb der Motorgetriebeeinheit ( 6 ) und zwischen den Flüssigkeitstanks ( 7, 8 ) zumindest ein Flüssigkeitsbehälter ( 11 ) angeordnet ist.

4. Pflanzenschutzspritze nach Anspruch 3, **dadurch gekennzeichnet, dass** zumindest ein zwischen den Flüssigkeitstanks ( 7, 8 ) angeordneter Flüssigkeitsbehälter ( 11 ) die Flüssigkeitstanks ( 7, 8 ) miteinander verbindet.

5. Pflanzenschutzspritze nach zumindest einem der vorstehenden Ansprüche, **dadurch gekennzeichnet, dass** die unteren Bereiche der Flüssigkeitstanks ( 6, 7 ) zwischen den Rädern ( 2, 3 ) an den vorhandnem Freiraum zwischen den Rädern ( 2, 3 ) und den Lenkwinkeln der Räder ( 2, 3 ) angepasst ausgestaltet sind.

6. Pflanzenschutzspritze nach zumindest einem der vorstehenden Ansprüche, **dadurch gekennzeichnet, dass** der Flüssigkeitstank ( 12 ), der über den zwischen ihnen angeordneten Flüssigkeitsbehälter zu einem Flüssigkeitstank ( 12 ) verbunden ist, eine Einbuchtung ( 13 ) entsprechend der oberen Kontur der Motor- Getriebeeinheit ( 6 ) zur Anordnung der Motor- Getriebeeinheit ( 6 ) aufweist.

7. Pflanzenschutzspritze nach zumindest einem der vorstehenden Ansprüche, **dadurch gekennzeichnet, dass** eine Umpumpvorrichtung zum Umpumpen ( 10 ) der Flüssigkeit zwischen dem vorderen und dem hinteren Tank ( 7, 8 ) vorgesehen ist.
